Europäisches Patentamt

European Patent Office

Office européen des brevets

(11) Veröffentlichungsnummer : **0 393 041 B1**

(12)

# EUROPÄISCHE PATENTSCHRIFT

(45) Veröffentlichungstag der Patentschrift :
21.08.91 Patentblatt 91/34

(51) Int. Cl.⁵ : **F16H 1/445**, B60K 17/20

(21) Anmeldenummer : 88907317.7

(22) Anmeldetag : 31.08.88

(86) Internationale Anmeldenummer :
PCT/EP88/00783

(87) Internationale Veröffentlichungsnummer :
WO 89/02549 23.03.89 Gazette 89/07

(54) DIFFERENTIALGETRIEBE MIT EINER LAMELLENKUPPLUNG ALS SPERRKUPPLUNG.

(30) Priorität : 05.09.87 DE 3729887

(43) Veröffentlichungstag der Anmeldung :
24.10.90 Patentblatt 90/43

(45) Bekanntmachung des Hinweises auf die
Patenterteilung :
21.08.91 Patentblatt 91/34

(84) Benannte Vertragsstaaten :
DE FR GB IT

(56) Entgegenhaltungen :
EP-A- 264 579
DE-A- 3 345 927
DE-A- 3 444 843
GB-A- 1 379 416
US-A- 2 894 416

(73) Patentinhaber : ZAHNRADFABRIK
FRIEDRICHSHAFEN AKTIENGESELLSCHAFT
Löwentaler Strasse 100 Postfach 2520
W-7990 Friedrichshafen 1 (DE)

(72) Erfinder : GAZYAKAN, Ünal
Peoria Strasse 32
W-7990 Friedrichshafen (DE)
Erfinder : RÖGNER, Horst
Happenweilerstrasse 2
W-7997 Immenstaad (DE)
Erfinder : RUF, Gerhard
Buchenweg 9
W-7088 Hüttlingen (DE)

(74) Vertreter : Raue, Reimund
Zahnradfabrik Friedrichshafen AG Löwentaler
Strasse 100 Postfach 2520
W-7990 Friedrichshafen 1 (DE)

## Beschreibung

Die Erfindung betrifft ein Differentialgetriebe mit einer Lamellenkupplung als Sperrkupplung, mit den Merkmalen :

— ein Motor treibt ein Differentialgehäuse,

— das Differentialgehäuse treibt über mindestens einen Ausgleichsbolzen und mindestens ein Ausgleichsrad auf diesem. Ausgleichsbolzen ein erstes und ein zweites Abtriebsrad,

— das Differentialgehäuse hat einen Differentialgehäusetopf und einen Differentialgehäusedeckel,

— das Differentialgehäuse ist mit zwei Kegelrollenlagern in einem Achsgehäuse gelagert,

— das Achsgehäuse hat mindestens einen Achsgehäusedeckel,

— der Differentialgehäusetopf bildet einen Außenlamellenträger und trägt Außenlamellen,

— das erste Abtriebsrad bildet einen Innenlamellenträger und trägt Innenlamellen,

— die Außenlamellen und Innenlamellen bilden ein Lamellennaket und zusammen mit dem Außenlamellenträger und dem Innenlamellenträger eine Lamellenkupplung,

— die Lamellenkupplung bildet die Sperrkupplung für das Differentialgetriebe,

— ein Ruheteil und ein Arbeitsteil mit einer Betätigungskammer für Druckfluid bilden einen Schließzylinder für die Lamellenkupplung,

— der Ruheteil und über den Ruheteil auch der Arbeitsteil sind drehfest zum Achsgehäuse,

— ein Druckring ist drehfest zum Differentialgehäuse,

— Druckfluid in der Betätigungskammer drückt über den Arbeitsteil des Schließzylinders, das Drucklager, den Druckring und das Lamellenpaket gegen eine erste Schulter des Differentialgehäuses, zieht über das Differentialgehäuse an einer zweiten Schulter des Differentialgehäuses und drückt über die zweite Schulter und ein Gegenlager zurück gegen den Ruheteil des Schließzylinders.

Bei einem Differentialgetriebe dieser Art mit einer Lamellenkupplung als Sperrkupplung kann man ein Sperrdrehmoment zwischen den zwei Abtriebsrädern des Differentialgetriebes zwischen einer oberen und einer unteren Grenze willkürlich oder selbsttätig indern und damit den Drehzahlausgleich mehr oder weniger hemmen.

Ein bekanntes Differentialgetriebe dieser Art (DE-OS 3345927) hat zusätzlich die Merkmale :

— das Drucklager 15 und das Gegenlager 17 sind auf gleichem Durchmesser axial hintereinander angeordnet,

— der Ruheteil 1d des Schließzylinders 12, 1d ist ein Ringzylinder mit einer außenzylindrischen Dichtfläche und einer innenzylindrischen Dichtfläche in geringem radialen Abstand,

— der Arbeitsteil 12 des Schließzylinders 12, 1d ist ein Ringkolben mit einem Dichtring in einer Nut in einer innenzylindrischen Fläche und mit einem Dichtring in einer Nut in einer außenzylindrischen Fläche,

— Druckfluid fließt unmittelbar zum Ruheteil 1d des Schließzylinders 12, 1d durch eine biegsame Leitung innerhalb des Achsgehäuses 1,

— eine Tellerfeder 11 zwischen der ersten Schulter 2a des Differentialgehäuses 2 und dem Lamellenpaket 9 erzeugt ein Sperrdrehmoment zwischen den zwei Abtriebszahnrädern 7a, 7b auch dann, wenn der Schließzylinder nicht betätigt ist,

— die zwei Schultern 2a, 16a des Differentialgehäuses 2 liegen in großem Abstand zueinander an den axialen Enden des Differentialgehäuses 2,

— dieser große Abstand muß durch lange axiale Finger 13a, 14a an zwei Ringen 13, 14 überbrückt werden,

— grobe Durchbrüche und Aussparungen für diese Finger 13a, 14a vermindern die Steifigkeit des Differentialgehäuses 2.

Der Erfindung liegt die Aufgabe zugrunde, ein Differentialgetriebe dieser Art zu verbessern :

— die axiale Baulänge des Differentialgetriebes (in Richtung der gemeinsamen Achse der Abtriebsräder) soll kleiner werden,

— die beiden Teile des Schließzylinders sollen leichter zu fertigen sein,

— die biegsame Leitung innerhalb des Achsgehäuses mit ihren Einbau-, Ausbau- und Dichtproblemen soll entfallen,

— das Sperrdrehmoment soll zwischen einer möglichst geringen unteren Grenze und einer möglichst hohen oberen Grenze veränderbar sein,

— der axiale Abstand zwischen den zwei Schultern des Differentialgehäuses, zwischen denen die Schließkraft des Schließzylinders als Zugkraft wirkt und das Differentialgehäuse axial dehnen will, soll sehr gering sein, und das Differentialgehäuse selbst soll in seinem Abschnitt zwischen den zwei Schultern sehr steif sein, damit nur ein kleiner Teil der Schließkraft als symmetrisch wirkende, zusätzliche axiale Kraft die zwei Kegelrollenlager belastet.

Diese Aufgabe wird mit den Merkmalen des Anspruches 1 der Erfindung gelöst :

— das Drucklager und das Gegenlager liegen in einer gemeinsamen Axialebene — das verringert die axiale Baulänge,

— der Ruheteil und der Arbeitsteil des Schließzylinders sind als Stufenkolben ausgebildet mit zwei außenzylindrischen Dichtflächen und als Stufenzylinder mit Dichtringen in Nuten in zwei innenzylindrischen Flächen — das vereinfacht die Fertigung,

— ein Kragen an dem Achsgehäusedeckel hat eine außenzylindrische Dichtfläche ; der Ruheteil hat Dichtringe in Nuten in einer außenzylindrischen Fläche ; Druckfluid fließt aus einer Leitung in dem Kragen über radiale Löcher in eine Leitung in dem Ruheteil und von dort in die Betätigungskammer — das vermeidet die Schwierigkeiten einer biegsamen Leitung innerhalb des Achsgehäuses,

— die zwei Schultern des Differentialgehäuses liegen in geringem Abstand zueinander auf der gleichen axialen Seite des Ausgleichsbolzens ; das Differentialgehäuse hat nur wenige kleine Durchbrüche für die Druckstifte zwischen dem Druckring und dem Lamellenpaket und ist daher axial sehr steif — das verringert die zusätzliche Belastung der zwei Kegelrollenlager durch die Schließkraft,

— die Rückstellfedern öffnen die Lamellenkupplung vollständig das ergibt ein sehr geringes kleinstes Sperrdrehmoment.

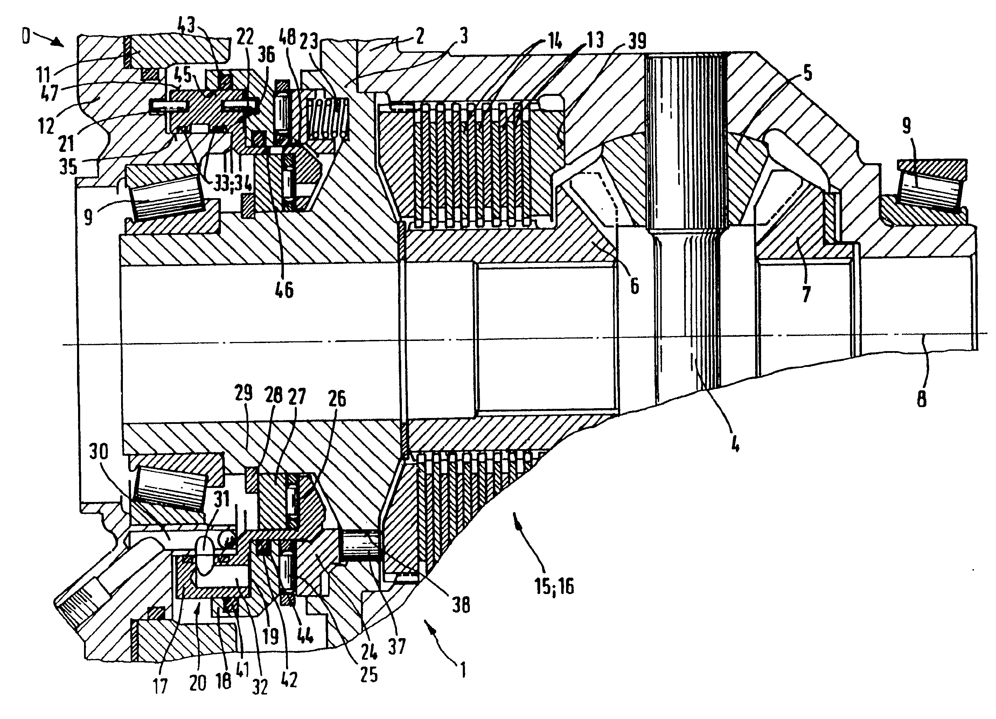

Die einzige Figur der Zeichnung zeigt einen Ausschnitt aus einem Schnitt (entlang der gemeinsamen Achse der zwei Abtriebsräder) durch ein Differentialgetriebe nach der Erfindung.

Ein (nicht dargestellter) Motor treibt ein Differentialgehäuse 1 mit einem Differentialgehäusetopf 2 und einem Differentialgehäusedeckel 3. Das Differentialgehäuse 1 treibt über einen Ausgleichsbolzen 4 und Ausgleichsräder 5 ein erstes und ein zweites Abtriebsrad 6, 7, die in einer gemeinsamen Achse 8 angeordnet sind. Das Differentialgehäuse 1 ist über zwei Kegelrollenlager 9 in einem Achsgehäuse 10 gelagert mit einem. Achsgehäusetopf 11 und einem Achsgehäusedeckel 12.

Der Differentialgehäusetopf 2 bildet einen Außenlamellenträger und trägt Außenlamellen 13. Das erste Abtriebsrad 6 bildet einen Innenlamellenträger und trägt Innenlamellen 14. Die Außenlamellen 13 und Innenlamellen 14 bilden ein Lamellenpaket 15 und zusammen mit dem Außenlamellenträger und Innenlamellenträger eine Lamellenkupplung 16. Die Lamellenkupplung 16 bildet eine Sperrkupplung für das Differentialgetriebe und kann einen Drehzahlausgleich zwischen den zwei Abtriebsrädern 6, 7 hemmen.

Ein Ruheteil 17 und ein Arbeitsteil 18 mit einer Betätigungskammer 19 für Druckfluid bilden einen Schließzylinder 20 für die Lamellenkupplung 16. Axiale Stifte 21, 22 in dem Ruheteil 17 halten den Ruheteil 17 und über den Ruheteil 17 auch den Arbeitsteil 18 drehfest zum Achsgehäusedeckel 12. Zwei Dichtringe 41, 42 in zwei Nuten 43, 44 in zwei innenzylindrischen Flächen 45, 46 des Arbeitsteiles 18 liegen dicht an zwei außenzylindrischen Dichtflächen 47, 48 des Ruheteiles 17 an.

Rückstellfedern 23 zwischen einem Druckring 24 und dem Differentialgehäusedeckel 3 drücken den Druckring 24 über ein Drucklager 25 gegen den Arbeitsteil 18 und damit auch gegen den Ruheteil 17 des Schließzylinders 20 und drücken den Ruheteil 17 über ein Gegenlager 26 gegen einen Stützring 27 vor einem Sicherungsring 28 auf einem Lagerhals 29 des Differentialgehäusedeckels 3. Die Rückstellfedern 23 halten den Druckring 24 drehfest zum Differentialgehäusedeckel 3.

Druckfluid kann aus einer Leitung 30 in dem Achsgehäusedeckel 12 über radiale Löcher 31 in eine Leitung 32 in dem Ruheteil 17 und von dort in die Betätigungskammer 19 fließen. Dichtringe 33 in Nuten 34 in einer innenzylindrischen Fläche 35 des Ruheteiles 17 liegen dicht an einer außenzylindrischen Dichtfläche 36 des Achsgehäusedeckels 12 an.

Druckfluid in der Betätigungskammer 19 drückt über den Arbeitsteil 18, das Drucklager 25, den Druckring 24 und Druckstifte 37 in axialen Bohrungen 38 des Differentialgehäusedeckels 3 das Lamellenpaket 15 der Lamellenkupplung 16 gegen eine Stirnfläche 39 des Differentialgehäusetopfes 2 axial vor dem Ausgleichsbolzen 4, zieht über einen Teil des Differential gehäusetopfes 2 und über einen Teil des Differentialgehäusedeckels 3 an dem Sicherungsring 28 hinter dem Stützring 27 und drückt über den Stützring 27 und das Gegenlager 26 wieder gegen den Ruheteil 17 des Schließzylinders 20.

Die Stirnfläche 39 des Differentialgehäusetopfes 2 und der Sicherungsring 28 auf dem Lagerhals 29 des Differentialgehäusedeckels 3 bilden eine erste und eine zweite Schulter des Differentialgehäuses 1. Diese zwei Schultern liegen in einem geringen axialen Abstand voneinander. Eine von dem Druckfluid in der Betätigungskammer 19 erzeugte Schließkraft des Schließzylinders 20 wirkt als Zugkraft nur zwischen diesen zwei Schultern, nur in einem kleinen Teil des Differentialgehäusetopfes 2 und nur in einem Teil des Differentialgehäusedeckels 3.

Bezugszeichen

| 1 | Differentialgehäuse |
|---|---|
| 2 | Differentialgehäusetopf |
| 3 | Differentialgehäusedeckel |
| 4 | Ausgleichsbolzen |
| 5 | Ausgleichsrad |
| 6 | Abtriebsrad |
| 7 | Abtriebsrad |
| 8 | Achse |
| 9 | Kegelrollenlager |
| 10 | Achsgehäuse |
| 11 | Achsgehäusetopf |
| 12 | Achsgehäusedeckel |
| 13 | Außenlamelle |
| 14 | Innenlamelle |

15 Lamellenpaket
16 Lamellenkupplung
17 Ruheteil
18 Arbeitsteil
19 Betätigungskammer
20 Schließzylinder
21 Stift
22 Stift
23 Rückstellfeder
24 Druckring
25 Drucklager
26 Gegenlager
27 Stützring
28 Sicherungsring
29 Lagerhals
30 Leitung
31 Loch
32 Leitung
33 Dichtring
34 Nut
35 Fläche
36 Dichtfläche
37 Druckstift
38 Bohrung
39 Stirnfläche
40 -
41 Dichtring
42 Dichtring
43 Nut
44 Nut
45 Fläche
46 Fläche
47 Dichtfläche
48 Dichtfläche

**Patentansprüche**

1. Differentialgetriebe mit einer Lamellenkupplung als Sperrkupplung, mit den Merkmalen :
— ein Motor treibt ein Differentialgehäuse (1) mit einem Differentialgehäusetopf (2) und einem Differentialgehäusedeckel (3),
— das Differentialgehäuse (1) treibt über mindestens einen Ausgleichsbolzen (4) und mindestens ein Ausgleichsrad (5) auf diesem Ausgleichsbolzen (4) ein erstes und ein zweites Abtriebsrad (6, 7),
— das Differentialgehäuse (1) ist über zwei Kegelrollenlager (9) gelagert in einem Achsgehäuse (10) mit einem Achsgehäusetopf (11) und einem Achsgehäusedeckel (12),
— der Differentialgehäusetopf (2) bildet einen Außenlamellenträger und trägt Außenlamellen (13),
— das erste Abtriebsrad (6) bildet einen Innenlamellenträger und trägt Innenlamellen (14),

— die Außenlamellen (13) und Innenlamellen (14) bilden ein Lamellenpaket (15) und mit dem Außenlamellenträger und dem Innenlamellenträger eine Lamellenkupplung (16),
— die Lamellenkupplung (16) bildet eine Sperrkupplung für das Differentialgetriebe,
— ein Ruheteil (17) und ein Arbeitsteil (18) mit einer Betätigungskammer (19) für Druckfluid bilden einen Schließzylinder (20) für die Lamellenkupplung (16),
— der Ruheteil (17) und über den Ruheteil (17) auch der Arbeitsteil (18) sind drehfest zum Achsgehäuse, ein Druckring (24) ist drehfest zum Differentialgehäuse (1), gekennzeichnet durch die Merkmale :
— Druckfluid in der Betätigungskammer (19) drückt über den Arbeitsteil (18) des Schließzylinders (20), ein Drucklager (25) und den Druckring (24) das Lamellenpaket (15) der Lamellenkupplung (16) gegen eine Stirnfläche (39) des Differentialgehäuses (1) axial vor dem Ausgleichsbolzen (4), zieht über einen axialen Teil des Differentialgehäuses (1) an einem Sicherungsring (28) auf einem Lagerhals (29) des Differentialgehäusedeckels (3) und drückt über einen Stützring (27) und ein Gegenlager (26) wieder zurück gegen den Ruheteil (17) des Schließzylinders (20),
— Rückstellfedern (23) zwischen dem Druckring (24) und dem Differentialgehäusedeckel (3) drücken über den Druckring (24) und das Drucklager (25) den Arbeitsteil (18) gegen den Ruheteil (17) des Schließzylinders (20) und öffnen die Lamellenkupplung (16) vollständig,
— zwei Dichtringe (41, 42) in zwei Nuten (43, 44) in zwei innenzylindrischen Flächen (45, 46) des Arbeitsteiles (18) liegen dicht an zwei außenzylindrischen Dichtflächen (47, 48) des Ruheteiles (17) an.

2. Differentialgetriebe nach Anspruch 1, mit den Merkmalen :
— axiale Stifte (21, 22) in dem Ruheteil (17) halten den Ruheteil (17) und über den Ruheteil (17) auch den Arbeitsteil (18) drehfest zum Achsgehäusedeckel (12),
— die Rückstellfedern (23) halten den Druckring (24) drehfest zum Differentialgehäusedeckel (3),
— Druckstifte (37) in axialen Bohrungen (38) des Differentialgehäusedeckels (3) übertragen eine Schließkraft des Schließzylinders (20) vom Druckring (24) auf das Lamellenpaket (15).

3. Differentialgetriebe nach Anspruch 1, mit den Merkmalen :
— Druckfluid kann aus einer Leitung (30) in dem Achsgehäusedeckel (12) über radiale Löcher (31) in eine Leitung (32) in dem Ruheteil (17) und von dort in die Betätigungskammer (19) fließen,
— Dichtringe (33) in Nuten (34) in einer innenzylindrischer Fläche (35) des Ruheteiles (17) liegen dicht an einer außenzylindrischen Dichtfläche (36) des Achsgehäusedeckels (12) an.

## Claims

1. Differential gear with a disc clutch as a locking clutch, with the features :
— a motor drives a differential housing (1) with a differential housing pot (2) and a differential housing cover (3),
— the differential housing (1) drives a first and a second side gear (6, 7) via at least one equalising pin (4) and at least one equalising wheel (5),
— the differential housing (1) bears in an axle housing (10), with an axle housing pot (11) and an axle housing cover (12), via two conical roller bearings (9),
— the differential housing pot (2) forms an outer disc support and carries outer discs (13),
— the first side gear (6) forms an inner disc support and carries inner discs (14),
— the outer discs (13) and inner discs (14) form a disc bundle (15) and, together with the outer disc support and the inner disc support, a disc clutch (16),
— the disc clutch (16) forms a locking clutch for the differential gear,
— a resting part (17) and a working part (18) with an actuating chamber (19) for pressure fluid form a closing cylinder (20) for the disc clutch (16),
— the resting part (17), and also the working part (18) via the resting part (17), are non-rotatable relative to the axle housing, — a pressure ring (24) is non-rotatable relative to the differential housing (1),
characterised by the features :
— via the working part (18) of the closing cylinder (20), a pressure bearing (25) and the pressure ring (24), pressure fluid in the actuating chamber (19) presses the disc bundle (15) of the disc clutch (16) against an end face (39) of the differential housing (1) axially in front of the equalising pin (4), pulls on a retaining ring (28) on an axle journal (29) of the differential housing cover (3) via an axial part of the differential housing (1), and presses back against the resting part (17) of the closing cylinder (20) via a support ring (27) and a counter-bearing (26),
— restoring springs (23) between the pressure ring (24) and the differential housing cover (3) press the working part (18) against the resting part (17) of the closing cylinder (20) via the pressure ring (24) and the pressure bearing (25) and open the disc clutch (16) completely,
— two sealing rings (41, 42) in two grooves (43, 44) in two inner cylindrical faces (45, 46) of the working part (18) are flush with two outer cylindrical sealing faces (47, 48) of the resting part (17).

2. Differential gear according to claim 1, with the features :
— axial pins (21, 22) in the resting part (17) hold the resting part (17), and also the working part (18) via the resting part (17), non-rotatably with respect to the axle housing cover (12),
— the restoring springs (23) hold the pressure ring (24) non-rotatably relative to the differential housing cover (3),
— pressure pins (37) in axial bores (38) of the differential housing cover (3) transmit a closing force of the closing cylinder (20) from the pressure ring (24) to the disc bundle (15).

3. Differential gear according to claim 1, with the features :
— pressure fluid can flow out of a line (30) in the axle housing cover (12) into a line (32) in the resting part (17) via radial holes (31), and thence into the actuating chamber (19),
— sealing rings (33) in grooves (34) in an inner cylindrical face (35) of the resting part (17) lie flush against an outer cylindrical sealing face (36) of the axle housing cover (12).

## Revendications

1. Différentiel comportant un embrayage multidisque à titre d'embrayage de blocage, dans lequel :
— un moteur entraîne un boîtier de différentiel (1) comportant un corps de boîtier (2) et un couvercle de boîtier (3),
— le boîtier de différentiel (1) entraîne un premier et un second pignon de sortie (6,7) par l'intermédiaire d'au moins un axe de satellite de différentiel (4) et d'au moins un pignon satellite (5) monté sur cet axe (4),
— le boîtier de différentiel (1) est monté au moyen de deux roulements à rouleaux coniques (9) dans un carter d'essieu (10) comportant un corps de carter (11) et un couvercle de carter (12),
— le corps de boîtier (2) forme un porte-disque extérieur et supporte des disques extérieurs (13),
— le premier pignon de sortie (6) forme un porte-disque intérieur et supporte des disques intérieurs (14),
— les disques extérieurs (13) et les disques intérieurs (14) forment ensemble un paquet de disques (15), ainsi qu'un embrayage multidisque (16) avec les porte-disque extérieur et intérieur,
— l'embrayage multidisque (16) forme un embrayage de blocage du différentiel,
— un élément stationnaire (17) et un élément de travail (18) coopérant avec une chambre de commande (19) pour un fluide de pression forment un vérin de fermeture (20) de l'embrayage multidisque (16),

— l'élément stationnaire (17) et, par son intermédiaire, l'élément de travail (18) sont fixes en rotation par rapport au carter d'essieu,

— une bague de poussée (24) est fixe en rotation par rapport au boîtier de différentiel (1),

caractérisé en ce que :

— du fluide de pression se trouvant dans la chambre de commande (19) pousse, par l'intermédiaire de l'élément de travail (18) du vérin de fermeture (20), d'un palier de butée (25) et de la bague de poussée (24), le paquet de disques (15) de l'embrayage (16) contre une surface frontale (39) du boîtier (1), laquelle est située axialement devant l'axe de satellite de différentiel (4), exerce une traction, par l'intermédiaire d'une partie axiale du boîtier de différentiel (1), sur une bague de fixation (28) montée sur un collet de palier (29) du couvercle de boîtier (3) et exerce une poussée, par l'intermédiaire d'une bague d'appui (27) et d'un palier de butée (26), contre l'élément stationnaire (17) du vérin de fermeture (20),

— des ressorts de rappel (23) disposés entre la bague de poussée (24) et le couvercle de boîtier (3) poussent l'élément de travail (18) contre l'élément stationnaire (17) du vérin de fermeture (20), par l'intermédiaire de la bague de poussée (24) et du palier de butée (25), et ouvrent complètement l'embrayage multidisque (16),

— deux joints annulaires d'étanchéité (41, 42), disposés dans deux rainures (43, 44) sur deux surfaces cylindriques intérieures (45, 46) de l'élément de travail (18), sont appliqués de manière étanche sur deux surfaces cylindriques extérieures (47, 48) de l'élément stationnaire (17).

2. Différentiel selon la revendication 1, caractérisé en ce que :

— des chevilles axiales (21, 22), engagées dans l'élément stationnaire (17), maintiennent fixes en rotation, par rapport au couvercle de carter (12), l'élément stationnaire (17) et en outre l'élément de travail (18) par l'intermédiaire de l'élément stationnaire (17),

— les ressorts de rappel (23) maintiennent la bague de poussée (24) fixe en rotation par rapport au couvercle de boîtier (3),

— des poussoirs (37) disposés dans des alésages axiaux (38) du couvercle de boîtier (3) transmettent une force de fermeture du vérin de fermeture (20), de la bague de poussée (24) au paquet de disques (15).

3. Différentiel selon la revendication 1, caractérisé en ce que :

— du fluide de pression peut s'écouler d'un conduit (30) ménagé dans le couvercle de carter (12), par les trous radiaux (31), à un conduit (32) ménagé dans l'élément stationnaire (17) et de là à la chambre de commande (19),

— des joints annulaires d'étanchéité (33) disposés dans des rainures (34) sur une surface cylindrique intérieure (35) de l'élément stationnaire (17) sont appliqués de manière étanche sur une surface cylindrique extérieure (36) du couvercle de carter (12).